# EUROPEAN PATENT SPECIFICATION

(11) **EP 2 227 016 B1**
(45) Date of publication and mention of the grant of the patent: **17.08.2016**
(21) Application number: 08863701.2
(22) Date of filing: 22.11.2008
(51) Int. Cl.: H04N 7/24, H04N 7/173, H04L 12/00, H04L 29/08, H04L 29/06

(54) **A CONTENT BUFFERING, QUERYING METHOD AND POINT-TO-POINT MEDIA TRANSMITTING SYSTEM**
INHALTSPUFFERUNGS- UND ABFRAGEVERFAHREN SOWIE PUNKT-ZU-PUNKT-MEDIENÜBERTRAGUNGSSYSTEM
PROCÉDÉ DE MISE EN TAMPON ET D'INTERROGATION DE CONTENU, ET SYSTÈME DE TRANSMISSION MULTIMÉDIA POINT À POINT

(30) Priority: 26.12.2007 CN 200710305850
(43) Date of publication of application: 08.09.2010
(73) Proprietor: Huawei Technologies Co., Ltd., Longgang District Shenzhen, Guangdong 518129 (CN)
(72) Inventor: CHEN, Haohua, Longgang District 518129 Shenzhen (CN); YAN, Zhefeng, Longgang District 518129 Shenzhen (CN)
(74) Representative: Körber, Martin Hans
(86) International application number: PCT/CN2008/073161
(87) International publication number: WO 2009/079948

(56) References cited:
- EP-A1- 1 643 716
- CN-A- 1 472 963
- CN-A- 1 710 857
- CN-A- 101 060 621
- JP-A- 2004 127 189
- US-A1- 2004 148 344
- THINH NGUYEN ET AL: "Efficient Video Dissemination in Structured Hybrid P2P Networks", 2006 IEEE INTERNATIONAL CONFERENCE ON MULTIMEDIA AND EXPO (ICME 2006), TORONTO, ONT., CANADA, IEEE, PISCATAWAY, NJ, USA, 1 July 2006 (2006-07-01), pages 1673-1676, XP031033175, ISBN: 978-1-4244-0366-0
- HEFEEDA M M ET AL: "A hybrid architecture for cost-effective on-demand media streaming", COMPUTER NETWORKS, ELSEVIER SCIENCE PUBLISHERS B.V., AMSTERDAM, NL, vol. 44, no. 3, 20 February 2004 (2004-02-20), pages 353-382, XP004483258, ISSN: 1389-1286, DOI: DOI:10.1016/J.COMNET.2003.10.002
- XIN LIU ET AL: "A peer-to-peer framework for cost-effective on-demand media streaming", CONSUMER COMMUNICATIONS AND NETWORKING CONFERENCE, 2006. CCNC 2006. 20 06 3RD IEEE LAS VEGAS, NV, USA 8-10 JAN. 2006, PISCATAWAY, NJ, USA,IEEE, vol. 1, 8 January 2006 (2006-01-08), pages 314-318, XP010893222, DOI: DOI:10.1109/CCNC.2006.1593038 ISBN: 978-1-4244-0085-0
- STUTZBACH D ET AL: "The scalability of swarming peer-to-peer content delivery", PARALLEL AND DISTRIBUTED PROCESSING AND APPLICATIONS: SECOND INTERNATIONAL SYMPOSIUM, ISPA 2004 PROCEEDINGS, HONG KONG, CHINA, DECEMBER 13 - 15, 2004 (IN: LECTURE NOTES IN COMPUTER SCIENCES), SPRINGER, DE, vol. 4th, 2 May 2005 (2005-05-02), pages 15-26, XP009100830, ISBN: 978-3-540-24128-7
- YANG B ET AL: "Designing a super-peer network", PROCEEDINGS 19TH. INTERNATIONAL CONFERENCE ON DATA ENGINEERING. (ICDE'2003). BANGALORE, INDIA, MARCH 5 - 8, 2003; [INTERNATIONAL CONFERENCE ON DATA ENGINEERING. (ICDE)], NEW YORK, NY : IEEE, US, vol. CONF. 19, 5 March 2003 (2003-03-05), pages 49-60, XP010678728, DOI: DOI:10.1109/ICDE.2003.1260781 ISBN: 978-0-7803-7665-6
- GISIK KWON ET AL: "An efficient peer-to-peer file sharing exploiting hierarchy and asymmetry", APPLICATIONS AND THE INTERNET, 2003. PROCEEDINGS. 2003 SYMPOSIUM ON 27-31 JAN. 2003, PISCATAWAY, NJ, USA,IEEE, 27 January 2003 (2003-01-27), pages 226-233, XP010629007, ISBN: 978-0-7695-1872-5
- ERTAO LV E ET AL: "Incorporating Clusters into Hybrid P2P Network", DIGITAL SOCIETY, 2007. ICDS '07. FIRST INTERNATIONAL CONFERENCE ON THE, IEEE, PISCATAWAY, NJ, USA, 2 January 2007 (2007-01-02), page 17, XP031331600, ISBN: 978-0-7695-2760-4

## Description

### FIELD OF THE TECHNOLOGY

The present invention relates to a point-to-point (PTP) media transport technology, and more particularly, to a method for caching and querying content and a PTP media transport system.

### BACKGROUND OF THE INVENTION

Video on demand refers to a service for providing on-demand interactive video services to users as desired. In an actual system, due to the limit of the system capacity, the service provider generally provides a certain number of video programs in advance, a user may select one of the programs to watch at any moment, and the on-demand system also provides functions such as pause, fast forward, and fast rewind to facilitate the user to watch the programs. The video on demand technology also becomes an important development subject in the industry.

The conventional video on demand technology has two solutions. In one solution, the data is recorded in the memory only, when the user watches programs, while the data exceeding the cache limit of the memory is discarded, and a local hard disk of the user does not provide a storage service. In the other solution, the content watched by the user is stored in the local hard disk of the user, for providing the subsequent users watching the content with related data.

The prior art has at least the following disadvantages. If the data is recorded in the memory only and the data exceeding the cache limit of the memory is discarded, the client whose playing time point is far away from the cache time point of the current node is unable to provide the node with the data. The on-demand system has abundant contents, while the users have different interests, so except for a few hot contents, most of the contents are watched by only a small number of users, and the watching time points thereof are dispersed. Therefore, it is difficult to fully utilize the resources of user nodes to provide assistance, and it is of little help in reducing the load of the server. As for the method in which the user stores the watched content in the local hard disk for providing subsequent users watching the content with the related data, however, other users usually search for the content as a complete file and has a low requirement on the timeliness, so the searching efficiency is quite low. Due to the operations such as dragging and fast forwarding of the users, the node can hardly cache a complete file, and usually cache only a part of the file that is watched. Therefore, actually the required complete content cannot be found through searching for a complete file.

CN1710857A discloses a system composed of centralized index server, and client end. The server includes a file management module and a block management module. The client end consists of an IE assistance module, a downloading file module, a P2P uploading module, and a local buffer management module. Through file attributive information and a block id transferred by the downloading file module, the file management module of the server obtains attributive information of a file. According to prearranged blocking strategy, the block management module carries out blocking of the file. Through attributive information of a block transferred by the downloading file module, the system obtains list of user information.

CN101060621A discloses a real-time flow media P2P network transmission system design method comprising: using a central server for a P2P network Peer management, authorization, certification and share service; using a Peer cluster technique to provide download and upload services among different Peers; using a distributed Duper-Node for flow media storage, and using a Peer buffer management for data service among different Peer.

"Efficient Video Dissemination in Structured Hybrid P2P Networks", 2006 IEEE INTERNATIONAL CONFERENCE ON MULTIMEDIA AND EXPO (ICME 2006), TORONTO, ONT., CANADA, IEEE, PISCATAWAY, NJ, USA, 1 July 2006 (2006-7-1)discloses a structured hybrid P2P Mesh for optimal video dissemination from a single source node to multiple receivers in a bandwidth-asymmetric network such as Digital Subscriber Line (DSL) access network. The structured mesh consists of one or more Supernodes responsible for node and mesh management and a large number of streaming nodes. The peers are interconnected in a special manner designed for streaming and real-time video dissemination and are responsible for the actual data delivery.

EP1643716A1 disclose a "PeerStreamer" which provides receiver-driven peer-to-peer (P2P) media streaming for loosely coupled P2P networks. Clients in the network operate in real-time to coordinate peers, stream media from multiple peers, perform load balancing, handle online/offline states of peers, and perform decoding and rendering the streaming media. The PeerStreamer uses high rate erasure resilient coding to allow multiple serving peers to hold partial media without conflict, such that clients simply retrieve fixed numbers of erasure coded blocks regardless of where and what specific blocks are retrieved. The PeerStreamer uses embedded coded media to vary streaming bitrates according to available serving bandwidths and client queue status.

"A hybrid architecture for cost-effective on-demand media streaming", COMPUTER NETWORKS, ELSEVIER SCIENCE PUBLISHERS B.V., AMSTERDAM, NL, vol.44, no.3, 20 February 2004 (2004-2-20) discloses an architecture which uses the often-underutilized peers' resources, aggregates contributions from multiple peers to serve a requesting peer, makes a good use of peer heterogeneity by assigning relatively more work to the powerful peers, and organizes peers in a network-aware fashion.

"Incorporating Clusters into Hybrid P2P Network" DIGITAL SOCIETY, 2007. ICDS '07. FIRST INTERNATIONAL CONFERENCE ON THE, IEEE, POSCATAWAY, NJ, USA, 2, January 2007 (2007-1-2) discloses a two-layer hybrid P2P network (HP2P). The upper layer is Chord network and the lower layer is cluster in HP2P. Peers are organized into clusters, and the network reorganizations are restricted within the clusters where a peer can join or leave. Each cluster is also enhanced through some specific mechanisms such as Supernode, metadata redundancy and gossip flooding.

### SUMMARY OF THE INVENTION

The invention is defined by the subject matter of the independent claims.

### BRIEF DESCRIPTION OF THE DRAWINGS

FIG. 1 is a schematic structural view of a PTP media transport system according to a first embodiment of the present invention;
FIG. 2 is a schematic structural view of a PTP media transport system according to a second embodiment of the present invention;
FIG. 3 is a schematic structural view of a PTP media transport system according to a third embodiment of the present invention;
FIG. 4 is a schematic structural view of a PTP media transport system according to a
   fourth embodiment of the present invention;
FIG. 5 is a schematic view of an internal structure of a management node according to a fifth embodiment of the present invention;
FIG. 6 is a schematic view of an internal structure of a management node according to a sixth embodiment of the present invention;
FIG. 7 is a flow chart of a method for caching contents according to a seventh embodiment of the present invention;
FIG. 8 is a flow chart of a method for searching contents according to an eighth embodiment of the present invention;
FIG. 9 is a flow chart of a process for starting an ordinary node to get access to a network according to a ninth embodiment of the present invention; and
FIG. 10 is a flow chart of cluster split according to a tenth embodiment of the present invention.

### DETAILED DESCRIPTION OF THE EMBODIMENTS

In order to make technical solutions and advantages of embodiments of the present invention more comprehensible, the present invention is illustrated in detail below with reference to some accompanying drawings.

In a first embodiment of the present invention, a point-to-point (PTP) media transport system is provided, in which user nodes are organized into a specific network structure to index a part of content cached on a hard disk of a client.

In this embodiment, the obtained media data content is received and cached in a form of content block. The media data is partitioned into blocks and stored in the form of block, and the media data includes video frames, audio frames, and the like. Here, video files are taken for example in this embodiment. Generally, the video files may be simply classified into content metadata and actual media data. The content metadata includes overall information of the whole media file, timing information, and the like. The actual media data mainly refers to data of specific video frames and audio frames. For example, in an asf file, a Header Object at the header of the file and a Simple Index Object at the tail of the file respectively belong to the overall file information and the timing information, and can both be considered as the content metadata. In an embodiment, the user node does not cache the content metadata, and the user needs to request a service from a content server (CS), this facilitates the access control and other management on the demanding behaviors of the user.

The size of cache needs to be controlled when the user performs caching on the hard disk, thus preventing the user from occupying excessive storage resources. In an embodiment, a single file is used for caching, a space of a fixed size may be allocated in advance, or the size of the file is gradually increased during the caching till a preset value. In an embodiment, each time a content block is cached, a file needs to be established to record data, and the total size of all data files is controlled. Due to the limited caching space, the space of old content data needs to be cleared to cache new content data as the users continuously demand and watch programs. A single file caching is applicable to cache content blocks with a fixed size, thus facilitating the block replacement. A multi-file caching is applicable to cache content blocks with non-fixed sizes.

For example, a data object of a media file with asf format is composed of a header and a large number of data packets with a fixed size. A Simple Index Object records the correspondence between time (a typical time interval is one second) and packet. For example, [30, 145] indicates that it is necessary to request data from the 145th packet, in order to drag to the video at the 30th second. The packets have the same size, and thus the offset of the requested packet in the file may be calculated as long as the address offset of the first packet in the content file is known. In an embodiment of the single file caching, the fixed size of each content block may be preset, and the packets in a specific number range are stored in a content block with a specific number. For example, it is set that a single cache file has a size of 1GBytes, and the size of content block is 4MBytes, so that one user node may cache 256 content blocks at most. For example, if the size of a certain packet is 6250 Bytes, then 4*1024*1024/6250=671 packets are stored in a content block, and 554 bytes at the tail of the content block are not used, which, however, is not a serious waste compared with the size of content block. Therefore, successive 671 packets starting from the 0^{th} packet are stored in the content block with a number 0, and the rest may be deduced through analogy. In the playing of the video program, every time the client receives the data of a complete content block, the data is cached in the hard disk, and the data cached in the hard disk can be indexed through the following triplet:
[cache block number, content indicator, content block number]

For example, [6, name of a demanded program (or name of a content file, hash value of specific content), 123] indicates that a content block, with number 123, of a certain content, is cached in the space of the 6^{th} file block.

If the user node requires the data starting from a particular packet, the packet number (3533) is first mapped into a content block number (3533/671 = 5 remains 178, corresponding to the 178^{th} packet on the 5^{th} content block), and the node caching the content block is searched. When data is requested from the returned node, the following information shall be contained in the request message:
[content indicator, content block number, in-block offset, size of the requested data]

Because the user node does not cache the content metadata, the user node does not know the structure inside the content block, and instead of giving only the packet number, the offset (178*6250) in the content block shall be indicated when the node requests the data.

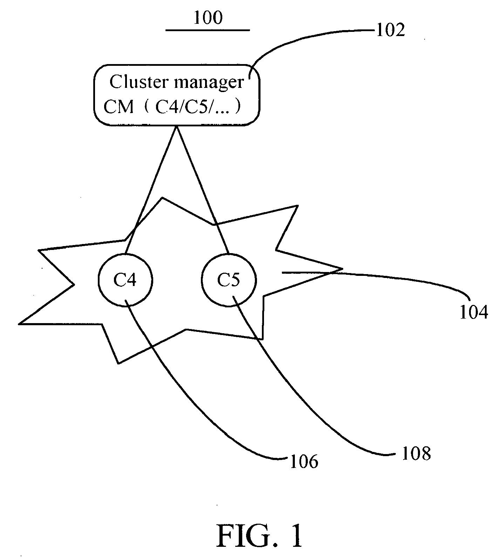

As shown in FIG. 1, a PTP media transport system 100 according to a first embodiment of the present invention includes a cluster manager 102, a cluster 104 which are formed by ordinary nodes (ONs), where an ordinary node may cache content C4 and/or content C5. An ordinary node caches the media data obtained during the media transport in a form of content block, content C4 and content C5 are two contents respectively, and in the embodiment of the present invention, the user nodes caching the same content are clustered together according to the content. The cluster 104 includes the user nodes of content C4 and content C5. The cluster manager 102 manages the cluster 104 of ordinary nodes according to contents C4 and C5, and records the block information and address information of content C4 and content C5. In this embodiment, the cluster manager (CM) 102 manages user nodes, and the CM is generally deployed on a server provided by a service provider, thus having a guaranteed online time. In an embodiment, a content distribution network (CDN) in a two-layer structure is adopted, so when deploying services, the service areas are isolated into independent areas, for example, an edge network, according to the geographic locations. One or more CSs and CMs are deployed at key positions in the edge network, and a central node distributes the content and dispatches the user request to the edge network according to a specific policy (usually based on the geographic proximity principle). The CS provides the data of specific content according to the user request, and the CM executes a user node management function. When the user node cannot find the user management node of the specific content, the user node is first added to the CM, and the CM manages the content block information of the user node and is responsible for querying the content.

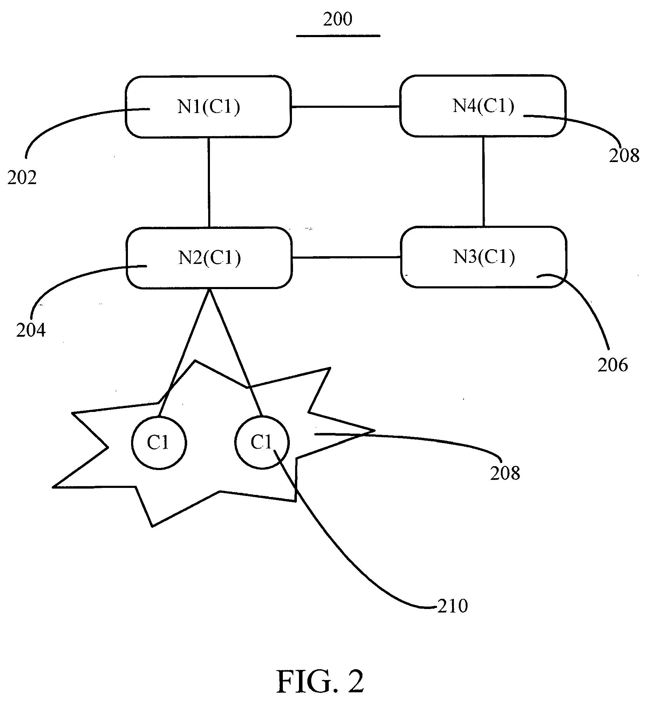

As shown in FIG. 2, a PTP media transport system 200 according to a second embodiment of the present invention includes management nodes N1, N2, N3, N4, a cluster 208, and content C1. The management node N2 is a node for managing content. For example, for some hot programs, many ordinary nodes cache the content block and many user nodes watch the content, so several nodes may be selected from the ordinary nodes to serve as super nodes (SNs) for managing content C 1. An SN manages a certain number of ONs, and each SN keeps connection with several other SNs to form SN neighborhood. In this way, all the nodes providing the content data and the nodes requiring the content data form a network, and the nodes requiring the content data can find other nodes capable of providing the data rapidly through the network.

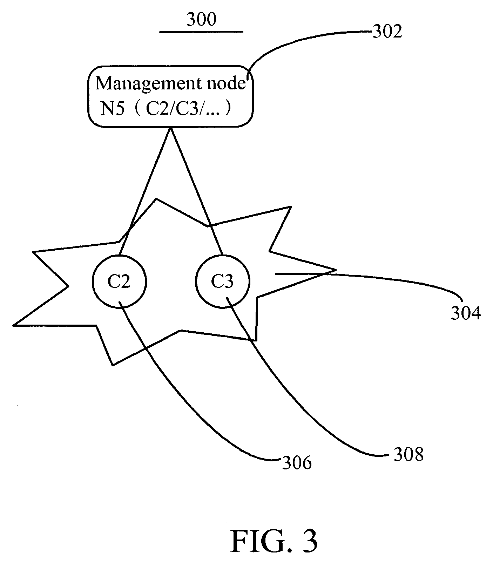

As shown in FIG. 3, a PTP media transport system 300 according to a third embodiment of the present invention includes a user management node 302, a cluster 304, content C2, and content C3. In this embodiment, for most contents, the number of users demanding the same content at the same time is small, so an SN is able to manage the ONs of multiple contents. However, as long as the number of node containing a certain content reaches a certain value, this part of nodes has to be split to form a new cluster of single content.

The SN and ON described above represent the SN and ON of specific content, and a node may be an ON for some content, but an SN for another content. The entire network is organized and managed according to the contents.

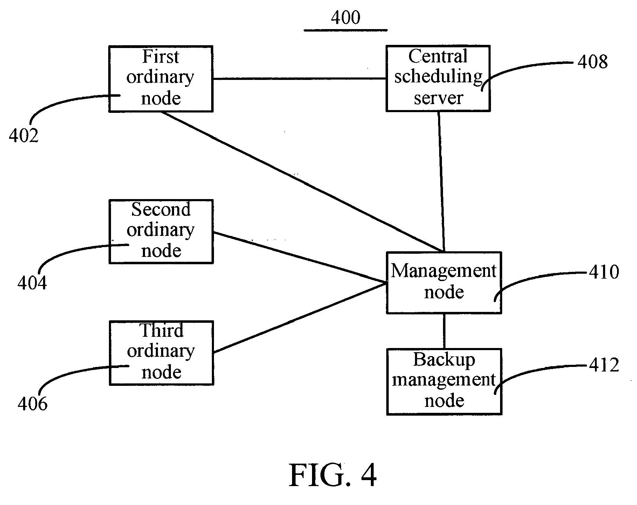

As shown in FIG. 4, a PTP media transport system 400 according to a fourth embodiment of the present invention includes a first ordinary node 402, a second ordinary node 404, a third ordinary node 406, a management node 410, a backup management node 412, and a central scheduling server 408. The first ordinary node 402 requests to get access to the second ordinary node 404 and the third ordinary node 406, receives the media data content obtained during the process of media transport, and caches the data in a form of content block. The first ordinary node 402 obtains the address of the management node 410 of specific content through the central scheduling server 408, and requests from the management node the information of the content block to be accessed. The central scheduling server 408 is adapted to register the content information recorded by the management node 410, and provide the address information of the corresponding management node. The central scheduling server is usually divided according to geographic locations. The backup management node 412 is adapted to take over the management node 410 when the management node 410 exits abnormally. In this embodiment, the backup management node 412 is selected from ordinary nodes managed by the SN.

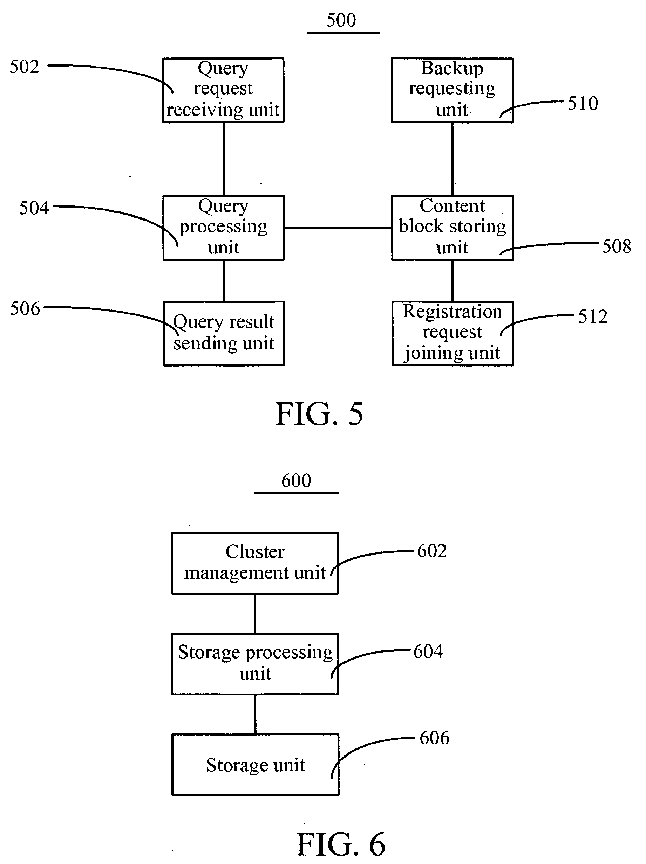

As shown in FIG. 5, a management node 500 according to a fifth embodiment of the present invention includes a query request receiving unit 502, a query processing unit 504, a query result sending unit 506, a content block storing unit 508, a backup requesting unit 510, and a registration request joining unit 512.

The query request receiving unit 502 is adapted to receive a request sent by an ordinary node for querying a specific content block of media data. The query request processing unit 504 is adapted to query the content block information cached in the ONs, or query other management nodes connected thereto for the address information of nodes having the content block. When a node queries the content block, a content indicator and a content block number are submitted to the SN, and the number of records to be returned is specified. The SN first searches the content block data of nodes recorded locally, and if the number of records satisfying the requirement is insufficient, the SN queries the neighboring SNs for records, and finally returns the query results to the node. The query results returned from the neighboring SNs may be cached for subsequent use. The query results include a plurality of the following data records:
[node address information, content block number, number of blocks]

The query result sending unit 506 is adapted to send the content block information or the address information of the content block node to the ON. The content block storing unit 508 is adapted to store the content block information of the media data and address information. The backup requesting unit 510 is adapted to request the backup management node to manage the content block information when the management node exits abnormally. The registration request joining unit 512 is adapted to register the managed content information to the central registration server.

The user node registers and joins the network when being started, and this process includes the following steps in this embodiment.

The user node communicates with the central scheduling server to request for joining the network, and informs the central scheduling server of the content cached in the user node. There may be one or more contents cached in the user node.

The scheduling server determines the edge network of the user node according to the address information (typically the IP/Port) of the user node, and then returns the address information of the CS and CM in the edge network. In addition, for each content cached by the user node, the scheduling server returns a certain number of SNs. If a certain content does not have a specified SN, the user node which caches the certain content joins the CM by default.

The user node requests for joining the SN managing different contents as an ON, and the content indicators are specified in the request message.

The SN allows the ON to join. If the SN rejects the ON to join, the ON may request of other SNs for allowing the SN to join, and if the ON is rejected by all the SNs, the ON requests for joining a specific CM.

The ON registers the block information of the specific content to the SN (or the CM).

When the user watches a program, new content blocks usually need to be cached, and sometimes old content blocks need to be replaced. All the changes in the local cache should be informed to the managing SN.

When the SN receives the joining request of the ON, the SN decides whether to accept the ON depending on the load of the SN. The load mainly refers to the CPU utilization rate, bandwidth occupation, and the number of accepted ONs. The conditions for the SN to decide whether to accept the new ON are as follows:
The SN accepts the ON if the load is small;
The SN accepts the ON if the joining times in the joining request of the ON reach a certain value;
The SN rejects the ON in all other situations;
Each time the ON is rejected by the SN, the joining time in the joining request thereof is added by 1. After the joining times reach a certain value, the SN will accept the ON regardless of the load, and a new cluster is split if necessary.

The message for the ON to register the content block includes one or more of the following data records:
[content indicator, initial block number, number of blocks]

One record represents a block group, that is, a plurality of successive blocks starting from the initial block. If a certain content has several block groups, a plurality of records exists.

The message for the ON to update the content block information includes the following information:
[content indicator, block number, whether to add or delete]

If the edge network has a plurality of CMs, a unique CM may be determined according to the content indicator. For example, if the content indicator is a file name, a hash value of a file name string is calculated first, and the hash value is divided by the number of the CMs, so as to determine the CM to join according to the remainder. The CMs are sorted according to a specific rule, for example, values of the IP addresses. Therefore, the ONs caching the same content will join the same CM if the ONs cannot find the SN, so that the user nodes are gathered according to the content.

When a user node no longer caches the content of the cluster thereof and no longer watches the content of the cluster thereof, the user node shall exit the cluster. If the user node is an ON in the cluster, the user node sends an exit message to the SN, and the SN deletes the block information registered by the ON. If the user node is an SN, the user node does not serve as an SN any more.

As shown in FIG. 6, a management node 600 according to a sixth embodiment of the present invention includes a cluster management unit 602, a storage processing unit 604, and a storage unit 606.

The cluster management unit 602 is adapted to manage the cluster of ordinary nodes caching the same content. The cluster management unit may manage the splitting and merging of the cluster. If an excessive number of ONs are managed by the SN or CM, a new SN is required to manage a part of the ONs, thereby reducing the load of the current SN or CM. Three situations of the cluster splitting are as follows:
1. If the current SN or CM manages a content, the new SN also manages the content.
2. If the current SN or CM manages multiple contents, and the number of ONs of a certain content exceeds a certain value, the new SN manages the certain content and related ONs.
3. If the current SN or CM manages multiple contents, but the number of ONs of each content is not large, the new SN manages a part of the multiple contents and related ONs.

The process of cluster splitting is as follows:
1. The SN selects an ON, and queries whether the ON can serve as a new SN.
2. The ON returns an agree instruction.
3. The SN sends the information required for SN upgrading to the ON, and the information mainly includes the information of the content indicator.
4. The ON registers the SN to the scheduling server, and one or more contents may be registered.
5. The scheduling server returns the address information of other SNs according to the content registered by the ON.
6. The new SN establishes the neighborhood relation with other SNs. If the new SN manages multiple contents, the new SN does not establish the neighborhood relation with other SNs.
7. If the SN originally manages multiple contents, the content split for the new SN is deregistered from the scheduling server, and the contents are not managed any more.
8. The ONs are informed to switch the SN. If one content is managed originally, a part of the ONs is informed to switch to the new SN, and if multiple contents are managed originally, the ONs not managing the content are informed to switch to the new SN.
9. The split ONs join the new SN.

Certain connectivity should be maintained among the SNs managing the same content, that is, a certain number of neighbors should be maintained. A SN knows the connectivity of the neighboring SNs through heartbeat messages between SNs. If the number of neighboring SN reaches an upper limit, it is determined whether to accept a new SN as a neighbor according to the information. If the connectivity of the new SN is smaller than that of the SN having the maximum connectivity among the neighboring SNs, the new SN is accepted as a neighbor, and the neighborhood with the neighbor having the maximum connectivity is disconnected.

The SN managing multiple contents does not have any neighboring SNs, and if any other SN is found to manage the same content, the current SN will not manage the content. For example, in the above drawing, if the scheduling server returns the address information of other SNs, the new SN deregisters the content from the scheduling server; the ONs of the current content is informed to switch to another SN (the SN returned by the server); and if an ON of the content requests to join, the request is rejected and the address of another SN (the SN returned by the server) is returned.

The process for normal exiting of the SN is similar to that of cluster splitting, in which a new SN is selected from the ONs to manage the content thereof, and all the ONs are informed to switch to the new SN. In the case of abnormal exiting of the SN, the ONs managed by the SN may directly join another SN, or join another SN after querying the scheduling server for the address of the SN. If a large number of ONs exist in the cluster, a certain impact may be caused to other SNs (or CMs) and the scheduling server.

In an embodiment, the SN selects one ON as a backup SN from the ONs managed by the SN, and the selected ON agrees to serve as the backup SN as long as the selected ON is not an SN managing other content or a backup SN currently. The SN should inform the content indicators that need to be managed to the backup SN, and keeps synchronous with the backup SN, so that the backup SN gets the address information of all the ONs in the cluster (the block information does not need to be synchronous). Meanwhile, the SN informs the address of the backup SN to other ONs. When the SN exits abnormally, the ONs may directly join the backup SN. The backup SN accepts the joining requests of the ONs in the cluster only (as the backup SN has the address information of the ONs). When the number of ON that joins the backup SN in the cluster reaches a certain number, it is judged that the SN is invalid, so the backup SN is upgraded to the SN immediately. Before that, if the backup SN actively detects that the SN is invalid, the backup SN is upgraded to the SN as well. Due to the uncertainty of the network events, when the SN is invalid, it cannot be determined whether the invalidation of the SN will be detected by the backup SN or other ONs first, so the above two situations may both occur.

If the backup SN exists, the backup SN is selected preferably during the cluster splitting. Another ON is selected only when the conditions are not satisfied. For example, when a new cluster is to be split to manage a single content, but the backup SN does not cache the content, another ON having the content will be selected to serve as a new SN.

The basis for selecting the backup SN or the new SN is that: after being online for a certain period of time (5 minutes, the state is relatively stable and the ON will not exit easily), the ONs caching more blocks (of the content) are selected preferably, or the ONs watching the content currently are selected preferably.

If the number of ONs managed by the SN is reduced, the clusters need to be merged. In the embodiment of the present invention, the cluster merging includes the following tow situations:
1. The SN merges with the neighbors thereof, and the SNs only manage a single content.
2. The SN merges with the CM. The SN may manage multiple contents; the SN may also manage a single content, but has no neighboring nodes.

If the SN detects that the number of the managed ONs has reduced to a certain value, the cluster merging process is started. If no neighboring SN exists, the SN informs the ONs to switch to the CM, and the SN also joins the CM. If several CMs exist, the ONs having the same content are clustered to the same CM. If the SN has neighboring SNs, the SN selects an SN having the smallest load to merge, and the load information is obtained from the heartbeat message. The SN informs the ONs to switch to the selected new SN, and also joins the new SN after disconnecting all the neighborhood relations.

The storage processing unit 604 is adapted to process the records of the content block information of the media content and address information. The storage unit 606 is adapted to record the content block information of the media content and the address information.

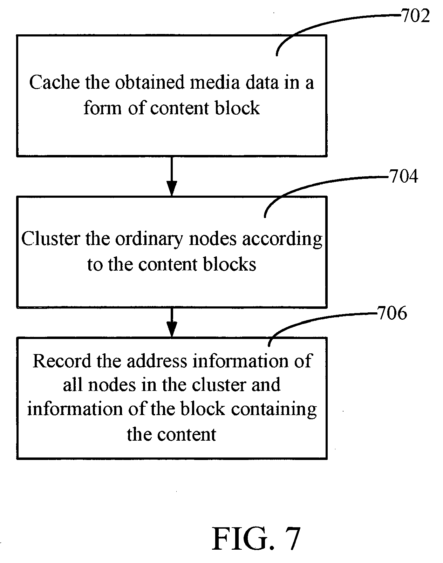

As shown in FIG. 7, a method for caching content according to a seventh embodiment of the present invention includes the following steps:
In step 702, the obtained media data content is cached in a form of content block. The media data is divided into blocks and stored in the form of block, and the media data includes video frames, audio frames, and so on. Here, video files are taken for example in this embodiment. Generally, the video files may be simply classified into content metadata and actual media data. The metadata includes overall information of the whole media file, timing information, and the like. The media data mainly refers to data of specific video frames and audio frames. For example, in an asf file, a Header Object (the overall file information) at the header of the file and an index object (for timing, for example a Simple Index Object) at the tail of the file respectively can both be considered as the content metadata. In an embodiment, the user node does not cache the content metadata, and the user need to request a service from a content server (CS), so as to facilitate the access control and other management on the demanding behaviors of the user.

The size of cache needs to be controlled when the user performs caching on the hard disk, thus preventing the user from occupying excessive storage resources. In an embodiment, a single file is used for caching, a space of a fixed size may be allocated in advance, or the size of the file is gradually increased during the caching till a preset value. In an embodiment, each time a content block is cached, a file needs to be established to record data, and the total size of all data files is controlled. Due to the limited caching space, the space of old content data needs to be cleared to cache new content data as the users continuously demand and watch programs. A single file caching is applicable to cache content blocks with a fixed size, thus facilitating the block replacement. A multi-file caching is applicable to cache content blocks with non-fixed sizes.

For example, a data object of a media file with asf format is composed of a header and a large number of data packets with a fixed size. A Simple Index Object records the correspondence between time (a typical time interval is one second) and packet. For example, [30, 145] indicates that it is necessary to request data from the 145^{th} packet, in order to drag to the video at the 30^{th} second. The packets have the same size, and thus the offset of the requested packet in the file may be calculated as long as the address offset of the first packet in the content file is known. In an embodiment of the single file caching, the fixed size of each content block may be preset, and the packets in a specific number range are stored in a content block with a specific number. For example, it is set that a single file cache file has a size of 1GBytes, and the size of content block is 4MBytes, so that one user node may cache 256 content blocks at most. For example, if the size of a certain packet is 6250 Bytes, then 4*1024*1024/6250=671 packets are stored in a content block, and 554 bytes at the tail of the content block are not used, which, however, is not a serious waste as compared with the size of block. Therefore, successive 671 packets starting from the 0^{th} packet are stored in the content block with a number 0, and the rest may be deduced through analogy. In the playing of the video program, every time the client receives the data of a complete content block, the data is cached in the hard disk, and the data cached in the hard disk can be indexed through the following triplet:
[cache block number, content indicator, content block number]

For example, [6, name of a demanded program (or name of a content file, hash value of specific content), 123] indicates that a content block, with number 123, of a certain content, is cached in the space of the 6^{th} file block.

If the user node requires the data starting from a particular packet, the packet number (3533) is first mapped into a content block number (3533/671 = 5 remains 178, corresponding to the 178^{th} packet on the 5^{th} content block), and the node caching the content block is searched. When data is requested from the returned node, the following information shall be contained in the request message:
[content indicator, content block number, in-block offset, size of the requested data]

Because the user node does not cache the content metadata, the user node does not know the structure inside the content block, and instead of giving only the packet number, the offset (178*6250) in the content block shall be indicated when the node requests the data.

In step 704, the ordinary nodes are clustered according to the contents. In this embodiment, the ordinary nodes having the same content block are gathered as the same cluster. The client serves as a management node to manage one or more contents, or serves as an ordinary node belonging to one or more management nodes.

In step 706, one or more management nodes are selected to manage the cluster of ordinary nodes caching the same content, and the address information of all nodes and the block information having the content in the cluster is recorded. If several management nodes exist, the management nodes managing the same content are interconnected. The ordinary nodes join the management node of the specific content according to the contents cached by the ordinary nodes, and the block index information of the content cached by the ordinary nodes is uploaded. The ordinary nodes register the latest cached content block information to the management node, and deregister the replaced content block information from the management node. After all the blocks of a content cached by an ordinary node are replaced, the ordinary node exits the management node of the content. After the content blocks of the management node are all replaced, the management node no longer serves as a management node of the content. When the number of the management nodes is excessively large, an SN is required to manage the ONs. If the number of management nodes managed by the SN is excessively large, a new SN is required to share the load of the SN. If the management node exits abnormally, a backup management node may be used to take over the functions of the management node. The content block information recorded by the management node is registered to the central scheduling server.

The management of the cluster includes cluster splitting and cluster merging. If an excessive number of ONs are managed by the SN or CM, a new SN is required to manage a part of the ONs, thereby reducing the load of the current SN or CM. In the embodiment of the present invention, the cluster splitting includes the following three situations:
1. If the current SN or CM manages a content, the new SN also manages the content.
2. If the current SN or CM manages multiple contents, and the number of ONs of a certain content exceeds a certain value, the new SN manages the certain content and related ONs.
3. If the current SN or CM manages multiple contents, but the number of ONs of each content is not large, the new SN manages a part of the multiple contents and related ONs.

The process of cluster splitting is as follows:
1. The SN selects an ON, and queries whether the ON can serve as a new SN.
2. The ON returns an agree instruction.
3. The SN sends the information required for SN upgrading to the ON, and the information mainly includes the information of the content indicator.
4. The ON registers the SN to the central scheduling server, and one or more contents may be registered.
5. The central scheduling server returns the address information of other SNs according to the content registered by the ON.
6. The new SN establishes the neighborhood relation with other SNs. If the new SN manages multiple contents, the new SN does not establish the neighborhood relation with other SNs.
7. If the SN originally manages multiple contents, the content split for the new SN is deregistered from the central scheduling server, and the contents are not managed any more.
8. The ONs are informed to switch the SN. If one content is managed originally, a part of the ONs is informed to switch to the new SN, and if multiple contents are managed originally, the ONs not managing the content are informed to switch to the new SN.
9. The split ONs join the new SN.

Certain connectivity should be maintained among the SNs managing the same content, that is, a certain number of neighbors should be maintained. A SN knows the connectivity of the neighboring SNs through heartbeat messages between SNs. If the number of neighboring SN reaches an upper limit, it is determined whether to accept a new SN as a neighbor according to the information. If the connectivity of the new SN is smaller than that of the SN having the maximum connectivity among the neighboring SNs, the new SN is accepted as a neighbor, and the neighborhood with the neighbor having the maximum connectivity is disconnected.

The SN managing multiple contents does not have any neighboring SNs, and if any other SN is found to manage the same content, the current SN will not manage the content. For example, in the above drawing, if the scheduling server returns the address information of other SNs, the new SN deregisters the content from the scheduling server; the ONs of the current content is informed to switch to another SN (the SN returned by the server); and if an ON of the content requests to join, the request is rejected and the address of another SN (the SN returned by the server) is returned.

The process for normal exiting of the SN is similar to that of cluster splitting, in which a new SN is selected from the ONs to manage the content thereof, and all the ONs are informed to switch to the new SN. In the case of abnormal exiting of the SN, the ONs managed by the SN may directly join another SN, or join another SN after querying the scheduling server for the address of the SN. If a large number of ONs exist in the cluster, a certain impact may be caused to other SNs (or CMs) and the scheduling server.

In an embodiment, the SN selects one ON as a backup SN from the ONs managed by the SN, and the selected ON agrees to serve as the backup SN as long as the selected ON is not an SN managing other content or a backup SN currently. The SN should inform the content indicators that need to be managed to the backup SN, and keeps synchronous with the backup SN, so that the backup SN gets the address information of all the ONs in the cluster (the block information does not need to be synchronous). Meanwhile, the SN informs the address of the backup SN to other ONs. When the SN exits abnormally, the ONs may directly join the backup SN. The backup SN accepts the joining requests of the ONs in the cluster only (as the backup SN has the address information of the ONs). When the number of ON that joins the backup SN in the cluster reaches a certain number, it is judged that the SN is invalid, so the backup SN is upgraded to the SN immediately. Before that, if the backup SN actively detects that the SN is invalid, the backup SN is upgraded to the SN as well. Due to the uncertainty of the network events, when the SN is invalid, it cannot be determined whether the invalidation of the SN will be detected by the backup SN or other ONs first, so the above two situations may both occur.

If the backup SN exists, the backup SN is selected preferably during the cluster splitting. Another ON is selected only when the conditions are not satisfied. For example, when a new cluster is to be split to manage a single content, but the backup SN does not cache the content, another ON having the content will be selected to serve as a new SN.

The basis for selecting the backup SN or the new SN is that: after being online for a certain period of time (5 minutes, the state is relatively stable and the ON will not exit easily), the ONs caching more blocks (of the content) are selected preferably, or the ONs watching the content currently are selected preferably.

If the number of ONs managed by the SN is reduced, the clusters need to be merged. In the embodiment of the present invention, the cluster merging includes the following tow situations:
1. The SN merges with the neighbors thereof, and the SNs only manage a single content.
2. The SN merges with the CM. The SN may manage multiple contents; the SN may also manage a single content, but has no neighboring nodes.

If the SN detects that the number of the managed ONs has reduced to a certain value, the cluster merging process is started. If no neighboring SN exists, the SN informs the ONs to switch to the CM, and the SN also joins the CM. If several CMs exist, the ONs having the same content are clustered to the same CM. If the SN has neighboring SNs, the SN selects an SN having the smallest load to merge, and the load information is obtained from the heartbeat message. The SN informs the ONs to switch to the selected new SN, and also joins the new SN after disconnecting all the neighborhood relations.

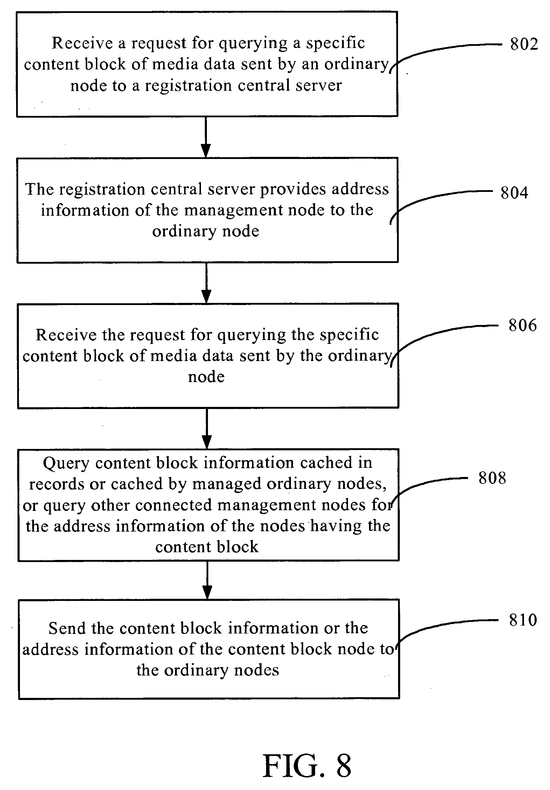

As shown in FIG. 8, a method for querying content according to an eighth embodiment of the present invention includes the following steps:
In step 802, the request for querying a specific content block of the media data sent by the ordinary node to a registration central server is received. In this embodiment, the user obtains the address of the management node through the registration central server, and of course, the user may also not obtain the address of the management node through the registration central server if the address is already known.

In step 804, the registration central server provides the ordinary nodes with the address information of the management node.

In step 806, the management node receives the request for querying a specific content block of the media data sent by the ordinary node. Here, video files are taken for example in this embodiment. Generally, the video files may be simply classified into content metadata and actual media data. The content metadata includes overall information of the whole media file, timing information, and the like. The actual media data mainly refers to data of specific video frames and audio frames. For example, in an asf file, a Header Object (the overall file information) at the header of the file and a Simple Index Object (for timing, for example a Simple Index Object) at the tail of the file respectively belong to the overall file information and the timing information, and can both be considered as the content metadata. In an embodiment, the user node does not cache the content metadata, and the user has to request a service from a content server (CS), so as to facilitate the access control and other management on the demanding behaviors of the user.

The size of cache needs to be controlled when the user performs caching on the hard disk, thus preventing the user from occupying excessive storage resources. In an embodiment, a single file is used for caching, a space of a fixed size may be allocated in advance, or the size of the file is gradually increased during the caching till a preset value. In an embodiment, each time a content block is cached, a file needs to be established to record data, and the total size of all data files is controlled. Due to the limited caching space, the space of old content data needs to be cleared to cache new content data as the users continuously demand and watch programs. A single file caching is applicable to cache content blocks with a fixed size, thus facilitating the block replacement. A multi-file caching is applicable to cache content blocks with non-fixed sizes.

For example, a data object of a media file with asf format is composed of a header and a large number of data packets with a fixed size. A Simple Index Object records the correspondence between time (a typical time interval is one second) and packet. For example, [30, 145] indicates that it is necessary to request data from the 145th packet, in order to drag to the video at the 30th second. The packets have the same size, and thus the offset of the requested packet in the file may be calculated as long as the address offset of the first packet in the content file is known. In an embodiment of the single file caching, the fixed size of each content block may be preset, and the packets in a specific number range are stored in a content block with a specific number. For example, it is set that a single cache file has a size of 1GBytes, and the size of content block is 4MBytes, so that one user node may cache 256 content blocks at most. For example, if the size of a certain packet is 6250 Bytes, then 4*1024*1024/6250=671 packets are stored in a content block, and 554 bytes at the tail of the content block are not used, which, however, is not a serious waste as compared with the size of block. Therefore, successive 671 packets starting from the 0^{th} packet are stored in the content block with a number 0, and the rest may be deduced through analogy. In the playing of the video program, every time the client receives the data of a complete content block, the data is cached in the hard disk, and the data cached in the hard disk can be indexed through the following triplet:
[cache block number, content indicator, content block number]

For example, [6, name of a demanded program (or name of a content file, hash value of specific content), 123] indicates that a content block, with number 123, of a certain content, is cached in the space of the 6^{th} file block.

If the user node requires the data starting from a particular packet, the packet number (3533) is first mapped into a content block number (3533/671 = 5 remains 178, corresponding to the 178^{th} packet on the 5^{th} content block), and the node caching the content block is searched. When data is requested from the returned node, the following information shall be contained in the request message:
[content indicator, content block number, in-block offset, size of the requested data]

Because the user node does not cache the content metadata, the user node does not know the structure inside the content block, and instead of giving only the packet number, the offset (178*6250) in the content block shall be indicated when the node requests the data.

In step 808, the management node queries the content block information of the ordinary nodes currently managed by the management node, or queries other management nodes connected thereto for the address information of the nodes having the content block.

When a node queries the content block, a content indicator and a block number are submitted to the SN, and the number of records to be returned is specified. The SN first searches the content block data of nodes recorded locally, and if the number of records satisfying the requirement is insufficient, the SN queries the neighboring SNs for records, and finally returns the query results to the node. The query results returned from the neighboring SNs may be cached for subsequent use. The query results include a plurality of the following data records:
[node address information, content block number, number of blocks]

If the user node requires the data starting from a particular packet, the packet number (3533) is first mapped into a block number (3533/671 = 5 remains 178, corresponding to the 178^{th} packet on the 5^{th} content block), and the node caching the content block is searched. When data is requested from the returned node, the following information shall be contained in the request message:
[content indicator, content block number, in-block offset, size of the requested data]

The user node does not cache the content metadata, so the user node does not know the structure inside the content block, and instead of giving only the packet number, the offset (178*6250) in the block shall be indicated when the node requests the data.

In step 810, the content block information or the address information of the content block node is sent to the ordinary node. If the management node has the record of the content block information, the management node directly provides the information to the user. If the management node does not exist, and the content is stored in the backup management node of the management node, the address information of the backup management nodes is provided to the user.

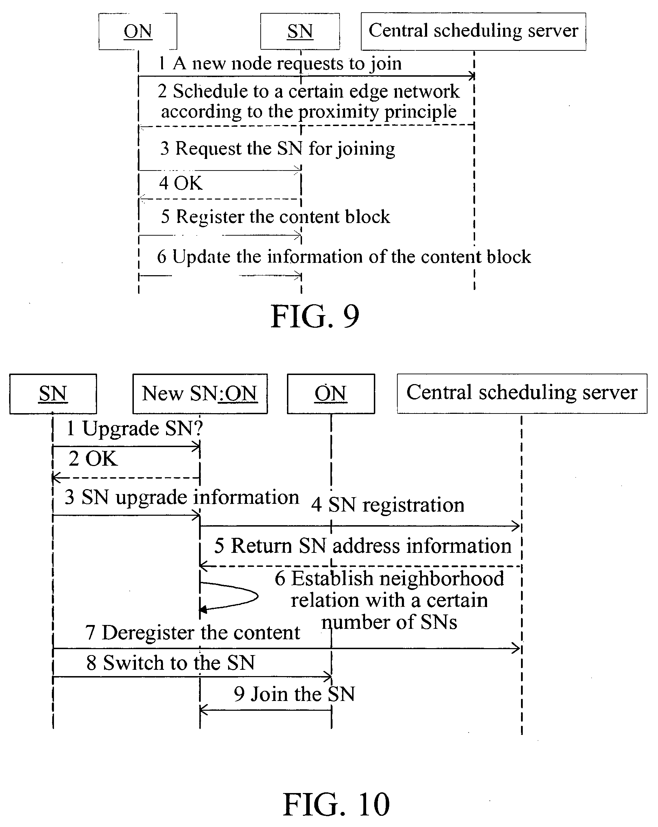

As shown in FIG. 9, a process for the ordinary node to join the network when being started according to a ninth embodiment of the present invention includes the following steps:
1. The ordinary node communicates with the central scheduling server to request for joining the network, and informs the central scheduling server of the content cached in the ordinary node. The content may be multiple contents.
2. The central scheduling server determines the edge network of the ordinary node according to the address information (typically the IP/Port) of the ordinary node, and then returns the address information of the CS and CM in the edge network. In addition, for each content cached by the ordinary node, the central scheduling server returns a certain number of SNs. If a certain content does not have a specified SN, the ordinary node joins the CM by default.
3. The ordinary node requests for joining the SN managing different contents as an ON, and the content indicators are specified in the request message.
4. The SN allows the ON to join. If the SN rejects the ON to join, the ON may request other SNs, and if the ON is rejected by all the SNs, the ON requests for joining a specific CM.
5. The ON registers the block information of the specific content to the SN or CM.
6. When the user watches a program, new content blocks usually need to be cached, and sometimes old content blocks need to be replaced. All the changes in the local cache should be informed to the managing SN.

As shown in FIG. 10, a process for cluster splitting according to a tenth embodiment of the present invention includes the following steps:
1. The SN selects an ON, and queries whether the ON can serve as a new SN.
2. The ON returns an agree instruction.
3. The SN sends the information required for SN upgrading to the ON, and the information mainly includes the information of the content indicator.
4. The ON registers the SN to the central scheduling server, and one or more contents may be registered.
5. The central scheduling server returns the address information of other SNs according to the content registered by the ON.
6. The new SN establishes the neighborhood relation with other SNs. If the new SN manages multiple contents, the SN does not establish the neighborhood relation with other SNs.
7. If the SN originally manages multiple contents, the content split for the new SN is deregistered from the central scheduling server, and the content is not managed any more.
8. The ONs are informed to switch the SN. If one content is managed originally, a part of the ONs is informed to switch to the new SN, and if multiple contents are managed originally, the ONs not managing the content are informed to switch to the new SN.
9. The split ONs join the new SN.

In embodiments of the present invention, ordinary nodes cache the media data obtained during media transport in a form of content block, and the ordinary nodes are clustered according to the contents. One or more management nodes are selected to manage the cluster of ordinary nodes caching the same content, so that the ordinary nodes can utilize the content stored by other users conveniently and effectively, thus increasing the searching accuracy and efficiency of the user, overcoming the defect of low searching efficiency in the prior art, and lowering the load of the server. By merging and splitting the clusters, the instability of the management node caused by over-large load is prevented. Further, through the block information of the backup management node, the content data of the requested block can be obtained even if the management node is offline. By registering the block information and the cluster information to the central scheduling server, the user can easily find each management node, thus improving the efficiency of the PTP media transport system. By deregistering the replaced content blocks, the resources of the system are saved, thus increasing the utilization of the effective resources of the system. The content block information is updated by registering the newly cached content block information, so that the user obtains the latest content block information when requesting for the information. The cluster manager manages the content block information, thus enhancing the stability of the system and ensuring that the effective data of the system is provided in time. A plurality of management nodes is connected to one another, so that the management nodes in the system achieve the load balance, so as to improve the processing capability of the system.

Persons of ordinary skill in the art can understand that all or a part of the steps of the method according to the embodiments may be implemented through a program instructing related hardware, and the program is stored in a computer readable storage medium. When the program is run, one of the steps of the method according to the embodiments or any combination thereof is performed.

In addition, the functional units in the embodiments of the present invention may be integrated in a processing module, or the units physically exist separately, or two or more units are integrated in a module. The integrated module may be implemented through hardware, or as a software function module. When the integrated module is implemented as the software function module and sold or used as an independent product, the integrated module may be stored in a computer readable storage medium. The storage medium may be a read-only memory (ROM), a magnetic disk, an optical disk, and the like.

Finally, it should be noted that the above embodiments are merely provided for describing the technical solutions of the present invention, but not intended to limit the present invention. It should be understood by persons of ordinary skill in the art that although the present invention has been described in detail with reference to some exemplary embodiments, modifications can be made to the technical solutions described in the embodiments.

## Claims

1. A method for caching content, **characterized in that**, the method comprises:
caching (702) obtained media data content in a form of content block;
clustering (704) a plurality of ordinary nodes, ONs, according to the content; and
selecting one or more management nodes to manage the cluster of the ONs caching the same content, and recording (706) address information of the ONs in the cluster and information of the content blocks containing the content;
wherein the management node comprises a cluster manager, CM, and a super node, SN, wherein the cluster manager is a management tool set in a server to manage the cluster, and the SN is configured to manage a certain number of the ONs;
the method further comprises:
starting cluster splitting to select an ON to manage the new split cluster, if the load of the CM or SN is too large;
starting cluster merge process, if the number of ONs managed by the CM or SN reduces to a certain value;
wherein the starting cluster splitting to select an ON to manage the new split cluster comprises:
selecting, by the SN, an ON and querying, by the SN, whether the selected ON can serve as a new SN to manage a certain number of the ONs;
if the selected ON returns an agree instruction, sending, by the SN, the information required for SN upgrading to the selected ON;
registering to a central scheduling server, by the selected ON, to serve as a new SN, wherein one or more contents may be registered;
informing, if one content is managed by the CM or SN before the cluster splitting, a part of the ONs related to said content to switch to and join the new SN, and if multiple contents are managed by the CM or SN before the cluster splitting and the number of ONs of a certain content exceeds a certain value, the ONs related to said certain content to switch to and join the new SN;
and the starting cluster merge process comprises:
if no neighboring SN of the SN exists, informing by the SN, the ONs to switch to the CM, and the SN joins the CM; or
if the SN has neighboring SNs, selecting, by the SN, an SN having the smallest load to merge; informing, by the SN, the ONs to switch to the selected SN, disconnecting, by the SN, all the neighborhood relations, and joining, by the SN, the selected SN.

2. The method according to claim 1, wherein a part of a plurality of management nodes managing the same content interconnect, if the plurality of management nodes exist.

3. The method according to claim 1, wherein the method further comprises:
joining, by an ordinary node, a management node of a certain content according to the content cached by the ordinary node, and uploading the content block information of the content cached by the ordinary node.

4. The method according to claim 1 or 3, wherein the method further comprises:
exiting, by the ordinary node, the management node of a certain content after all content blocks of the certain content cached by the ordinary node are replaced.

5. The method according to claim 1, wherein the method further comprises:
registering the information of the SN or the CM to a central scheduling server which is configured to register the content information recorded by the management node, and provide the address information of the corresponding management node.

6. The method according to claim 1, wherein the method further comprises:
registering, by the ordinary node, the content block information of the content cached latest to the management node, and deregistering the content block information of the content replaced to the management node.

7. The method according to claim 1, wherein the content block comprises:
cache block number, content indicator and content block number.

8. The method according to any one of claims 1-7, wherein the media data comprises:
the data of audio frame and/or video frame.

9. The method according to any one of claims 1-7, wherein said caching obtained media data content in a form of content block comprises:
utilizing a content block with fixed size to cache the media data.

10. A point-to-point, PTP, media transport system, **characterised in that**, the system comprises:
a plurality of ordinary nodes, ONs, (402, 404, 406), adapted to cache obtained media data content in a form of content block; and
a management node (410), adapted to cluster the ordinary nodes according to the media data content, and record content block information of the content and address information, wherein the management node is a cluster manager, CM, and a super node, SN, wherein the cluster manager is a management tool set in a server to manage the cluster, and the SN is configured to manage a certain number of the ONs; and is adapted to start cluster splitting to select an ON to manage the new split cluster, if the load of the CM or SN is too large; start cluster merge process, if the number of ONs managed by the SN reduces to a certain value;
wherein the starting cluster splitting to select an ON to manage the new split cluster comprises:
selecting, by the SN, an ON and querying, by the SN, whether the ON can serve as a new SN to manage a certain number of the ONs;
if the selected ON returns an agree instruction, sending, by the SN, the information required for SN upgrading to the selected ON;
registering to a central scheduling server, by the selected ON, to serve as a new SN, wherein one or more contents may be registered;
informing, if one content is managed by the CM or SN before the cluster splitting, a part of the ONs related to said content to switch to and join the new SN, and if multiple contents are managed by the CM or SN before the cluster splitting and the number of ONs of a certain content exceeds a certain value, the ONs related to said certain content to switch to and join the new SN;
and the starting cluster merge process comprises:
if no neighboring SN of the SN exists, informing by the SN, the ONs to switch to the CM, and the SN joins the CM; or
if the SN has neighboring SNs, selecting, by the SN, an SN having the smallest load to merge; informing, by the SN, the ONs to switch to the selected SN, disconnecting, by the SN, all the neighborhood relations, and joining, by the SN, the selected SN.

11. The system according to claim 10, wherein the system further comprises:
a central scheduling server (408), adapted to register the content managed by a super node, and return the information of the super node in a specific region according to the content; and
a backup management node (412), adapted to take over the management node when the management node exits abnormally.

## Patentansprüche

1. Verfahren zum Zwischenspeichern von Inhalt, **dadurch gekennzeichnet, dass** das Verfahren Folgendes umfasst:
Zwischenspeichern (702) erhaltenen Mediendateninhalts in einer Form von Inhaltsblöcken;
Clustern (704) von mehreren gewöhnlichen Knoten, ONs, gemäß dem Inhalt; und Auswählen eines oder mehrerer Managementknoten, um das Cluster von ONs zu managen, das denselben Inhalt zwischenspeichert, und Aufzeichnen (706) von Adressinformationen der ONs in dem Cluster und Informationen über die Inhaltsblöcke, die den Inhalt enthalten;
wobei der Managementknoten einen Cluster-Manager, CM, und einen Superknoten, SN, umfasst, wobei der Cluster-Manager ein Management-Werkzeugsatz in einem Server ist, um das Cluster zu managen, und der SN konfiguriert ist, eine spezielle Anzahl der ONs zu managen;
wobei das Verfahren ferner Folgendes umfasst:
Starten von Cluster-Aufspaltung, um einen ON auszuwählen, um das neue aufgespaltene Cluster zu managen, falls die Last des CM oder SN zu groß ist;
Starten eines Cluster-Zusammenführungsprozesses, falls sich die Anzahl von ONs, die durch den CM oder den SN gemanagt wird, auf einen speziellen Wert reduziert;
wobei das Starten von Cluster-Aufspaltung, um einen ON auszuwählen, um das neue aufgespaltene Cluster zu managen, Folgendes umfasst:
Auswählen durch den SN eines ON und Abfragen durch den SN, ob der ausgewählte ON als ein neuer SN dienen kann, um eine spezielle Anzahl der ONs zu managen;
falls der ausgewählte ON einen Zustimmungsbefehl zurückgibt, Senden durch den SN der Informationen, die zur SN-Aufrüstung erforderlich sind, zu dem ausgewählten ON;
Eintragen in einen zentralen Planungs-Server durch den ausgewählten ON, als ein neuer SN zu dienen, wobei ein oder mehrere Inhalte eingetragen werden können;
Informieren, falls ein Inhalt durch den CM oder SN vor der Cluster-Aufspaltung gemanagt wird, eines Teils der ONs, die zu dem Inhalt gehören, zu dem neuen SN umzuschalten und ihm beizutreten, und Informieren, falls mehrere Inhalte durch den CM oder SN vor der Cluster-Aufspaltung gemanagt werden und die Anzahl von ONs eines speziellen Inhalts einen speziellen Wert übersteigt, der ONs, die zu dem speziellen Inhalt gehören, zu dem neuen SN umzuschalten und ihm beizutreten;
und das Starten des Cluster-Zusammenführungsprozesses Folgendes umfasst:
falls kein Nachbar-SN des SN existiert, Informieren durch den SN der ONs, zu dem CM zu schalten, und der SN tritt dem CM bei; oder
falls der SN Nachbar-SNs aufweist, Auswählen durch den SN eines SN, der die kleinste Last aufweist, zum Zusammenführen; Informieren durch den SN der ONs, zu dem ausgewählten SN zu schalten, Trennen durch den SN aller Nachbarschaftsbeziehungen und Beitreten durch den SN zu dem ausgewählten SN.

2. Verfahren nach Anspruch 1, wobei sich ein Teil aus mehreren Managementknoten, die denselben Inhalt managen, miteinander verbindet, falls die mehreren Managementknoten existieren.

3. Verfahren nach Anspruch 1, wobei das Verfahren ferner Folgendes umfasst:
Beitreten durch einen gewöhnlichen Knoten zu einem Managementknoten eines speziellen Inhalts gemäß dem Inhalt, der durch den gewöhnlichen Knoten zwischengespeichert ist, und Hochladen der Inhaltsblockinformationen des Inhalts, der durch den gewöhnlichen Knoten zwischengespeichert ist.

4. Verfahren nach Anspruch 1 oder 3, wobei das Verfahren ferner Folgendes umfasst:
Austreten durch den gewöhnlichen Knoten aus dem Managementknoten eines speziellen Inhalts, nachdem alle Inhaltsblöcke eines speziellen Inhalts, der durch den gewöhnlichen Knoten zwischengespeichert ist, ersetzt sind.

5. Verfahren nach Anspruch 1, wobei das Verfahren ferner Folgendes umfasst:
Eintragen der Informationen über den SN oder den CM in einem zentralen Planungs-Server, der konfiguriert ist, die Inhaltsinformationen einzutragen, die durch den Managementknoten aufgezeichnet sind, und die Adressinformationen des entsprechenden Managementknotens bereitzustellen.

6. Verfahren nach Anspruch 1, wobei das Verfahren ferner Folgendes umfasst:
Eintragen durch den gewöhnlichen Knoten der Inhaltsblockinformationen des Inhalts, der als letzter zwischengespeichert ist, in den Managementknoten, und Austragen der Inhaltsblockinformationen des ersetzten Inhalts in den Managementknoten.

7. Verfahren nach Anspruch 1, wobei der Inhaltsblock Folgendes umfasst:
Zwischenspeicherblocknummer, Inhaltskennzeichen und Inhaltsblocknummer.

8. Verfahren nach einem der Ansprüche 1-7, wobei die Mediendaten Folgendes umfassen:
die Daten von Audiorahmen und/oder Videorahmen.

9. Verfahren nach einem der Ansprüche 1-7, wobei das Zwischenspeichern erhaltenen Mediendateninhalts in einer Form von Inhaltsblöcken Folgendes umfasst:
Nutzen eines Inhaltsblocks mit fester Größe, um die Mediendaten zwischenzuspeichern.

10. Punkt-zu-Punkt-Medientransportsystem, PTP-Medientransportsystem, **dadurch gekennzeichnet, dass** das System Folgendes umfasst:
mehrere gewöhnliche Knoten, ONs, (402, 404, 406), die ausgelegt sind, erhaltenen Mediendateninhalt in einer Form von Inhaltsblöcken zwischenzuspeichern; und
einen Managementknoten (410), der ausgelegt ist, aus den gewöhnlichen Knoten gemäß dem Mediendateninhalt Cluster zu bilden und Inhaltsblockinformationen des Inhalts und Adressinformationen aufzuzeichnen, wobei der Managementknoten ein Cluster-Manager, CM, und ein Superknoten, SN, ist, wobei der Cluster-Manager ein Management-Werkzeugsatz in einem Server ist, um das Cluster zu managen, und der SN konfiguriert ist, eine spezielle Anzahl der ONs zu managen; und ausgelegt ist, Cluster-Aufspaltung zu starten, um einen ON auszuwählen, um das neue aufgespaltene Cluster zu managen, falls die Last des CM oder SN zu groß ist; einen Cluster-Zusammenführungsprozess zu starten, falls sich die Anzahl von ONs, die durch den SN gemanagt wird, auf einen speziellen Wert reduziert;
wobei das Starten von Cluster-Aufspaltung, um einen ON auszuwählen, um das neue aufgespaltene Cluster zu managen, Folgendes umfasst:
Auswählen durch den SN eines ON und Abfragen durch den SN, ob der ON als ein neuer SN dienen kann, um eine spezielle Anzahl der ONs zu managen;
falls der ausgewählte ON einen Zustimmungsbefehl zurückgibt, Senden durch den SN der Informationen, die zur SN-Aufrüstung erforderlich sind, zu dem ausgewählten ON;
Eintragen in einen zentralen Planungs-Server durch den ausgewählten ON, als ein neuer SN zu dienen, wobei ein oder mehrere Inhalte eingetragen werden können;
Informieren, falls ein Inhalt durch den CM oder SN vor der Cluster-Aufspaltung gemanagt wird, eines Teils der ONs, die zu dem Inhalt gehören, zu dem neuen SN umzuschalten und ihm beizutreten, und Informieren, falls mehrere Inhalte durch den CM oder SN vor der Cluster-Aufspaltung gemanagt werden und die Anzahl von ONs eines speziellen Inhalts einen speziellen Wert übersteigt, der ONs, die zu dem speziellen Inhalt gehören, zu dem neuen SN umzuschalten und ihm beizutreten;
und Starten des Cluster-Zusammenführungsprozesses Folgendes umfasst:
falls kein Nachbar-SN des SN existiert, Informieren durch den SN der ONs, zu dem CM zu schalten, und der SN tritt dem CM bei; oder
falls der SN Nachbar-SNs aufweist, Auswählen durch den SN eines SN, der die kleinste Last aufweist, zum Zusammenführen; Informieren durch den SN der ONs, zu dem ausgewählten SN zu schalten, Trennen durch den SN aller Nachbarschaftsbeziehungen und Beitreten durch den SN zu dem ausgewählten SN.

11. System nach Anspruch 10, wobei das System ferner Folgendes umfasst:
einen zentralen Planungs-Server (408), der ausgelegt ist, den Inhalt, der durch einen Superknoten gemanagt wird, einzutragen und die Informationen über den Superknoten in einem spezifischen Bereich gemäß dem Inhalt zurückzugeben; und
einen Reserve-Managementknoten (412), der ausgelegt ist, den Managementknoten zu übernehmen, wenn der Managementknoten nicht normal beendet wird.

## Revendications

1. Procédé de mise en cache d'un contenu, **caractérisé en ce que** le procédé comprend :
la mise en cache (702) d'un contenu de données multimédia obtenu sous forme de bloc de contenu ;
la mise en grappes (704) d'une pluralité de noeuds ordinaires, ON, conformément au contenu ; et
la sélection d'un ou de plusieurs noeuds de gestion pour gérer la grappe de noeuds ON mettant en cache le même contenu, et l'enregistrement (706) d'informations d'adresse des noeuds ON dans la grappe et d'informations des blocs de contenu contenant le contenu :
dans lequel le noeud de gestion comprend un gestionnaire de grappes, CM, et un super noeud, SN, dans lequel le gestionnaire de grappes est un jeu d'outils de gestion dans un serveur pour gérer la grappe, et le noeud SN est configuré pour gérer un certain nombre des noeuds ON ;
le procédé comprenant en outre :
le lancement d'une division de grappe pour sélectionner un noeud ON destiné à gérer la nouvelle grappe divisée, si la charge du gestionnaire CM ou du noeud SN est trop importante ;
le lancement d'un processus de fusion de grappes, si le nombre de noeuds ON gérés par le gestionnaire CM ou le noeud SN chute à une certaine valeur ;
dans lequel le lancement de la division de grappe pour sélectionner un noeud ON destiné à gérer la nouvelle grappe divisée comprend :
la sélection, par le noeud SN, d'un noeud ON et l'interrogation, par le noeud SN, que le noeud ON sélectionné peut servir ou non de nouveau noeud SN pour gérer un certain nombre des noeud ON ;
si le noeud ON sélectionné renvoie une instruction d'accord, l'envoi, par le noeud SN, de l'information requise pour la mise à niveau par le noeud SN au noeud ON sélectionné ;
l'enregistrement auprès un serveur d'ordonnancement central, par le noeud ON sélectionné, afin de servir de nouveau noeud SN, dans lequel un ou plusieurs contenus peuvent être enregistrés ;
l'information, si un contenu est géré par le gestionnaire CM ou le noeud SN avant la division de grappe, à une partie des noeuds ON concernés par ledit contenu de commuter sur le nouveau noeud SN et de se joindre à celui-ci, et si de multiples contenus sont gérés par le gestionnaire CM ou le noeud SN avant la division de grappe et le nombre de noeuds ON d'un certain contenu dépasse une certaine valeur, aux noeuds ON concernés par ledit certain contenu de commuter sur le nouveau noeud SN et de se joindre à celui-ci ;
et le lancement de processus de fusion de grappes comprend :
si aucun noeud SN voisin du noeud SN n'existe, l'information, par le noeud SN, aux noeuds ON de commuter sur le gestionnaire CM, et au noeud SN de se joindre au gestionnaire CM ; ou
si le noeud SN a des noeuds SN voisins, la sélection, par le noeud SN, d'un noeud SN ayant la plus petite charge à fusionner ; l'information, par le noeud SN, aux noeuds ON de commuter sur le noeud SN sélectionné, la déconnexion, par le noeud SN, de toutes les relations de voisinage, et la jonction, par le noeud SN, au noeud SN sélectionné.

2. Procédé selon la revendication 1, dans lequel une partie d'une pluralité de noeuds de gestion gérant le même contenu s'interconnecte, si la pluralité de noeuds de gestion existe.

3. Procédé selon la revendication 1, le procédé comprenant en outre :
la jonction, par un noeud ordinaire, à un noeud de gestion d'un certain contenu conformément au contenu mis en cache par le noeud ordinaire, et le téléchargement en amont de l'information de bloc de contenu du contenu mis en cache par le noeud ordinaire.

4. Procédé selon la revendication 1 ou 3, le procédé comprenant en outre :
la sortie, par le noeud ordinaire, d'un noeud de gestion d'un certain contenu après que tous les blocs de contenu du certain contenu mis en cache par le noeud ordinaire sont remplacés.

5. Procédé selon la revendication 1, le procédé comprenant en outre :
l'enregistrement de l'information du noeud SN ou du gestionnaire CM auprès d'un serveur d'ordonnancement central qui est configuré pour enregistrer les informations de contenu traitées par le noeud de gestion, et fournir l'information d'adresse du noeud de gestion correspondant.

6. Procédé selon la revendication 1, le procédé comprenant en outre :
l'enregistrement, par le noeud ordinaire, de l'information de bloc de contenu du contenu mis en cache en dernier auprès du noeud de gestion, et le désenregistrement des informations de bloc de contenu du contenu remplacé auprès du noeud de gestion.

7. Procédé selon la revendication 1, dans lequel le bloc de contenu comprend :
un numéro de bloc de cache, un indicateur de contenu et un numéro de bloc de contenu.

8. Procédé selon l'une quelconque des revendications 1 à 7, dans lequel les données multimédia comprennent :
les données d'une trame audio et/ou d'une trame vidéo.

9. Procédé selon l'une quelconque des revendications 1 à 7, dans lequel ladite mise en cache d'un contenu de données multimédia obtenu sous forme de bloc de contenu comprend :
l'utilisation d'un bloc de contenu d'une taille fixe pour mettre en cache les données multimédia.

10. Système de transport multimédia point à point, PTP, **caractérisé en ce que** le système comprend :
une pluralité de noeuds ordinaires, ON, (402, 404, 406), adapté pour mettre en cache un contenu de données multimédia obtenu sous forme de bloc de contenu ; et
un noeud de gestion (410), adapté pour mettre en grappes les noeuds ordinaires conformément au contenu de données multimédia et enregistrer des informations de bloc de contenu du contenu et des informations d'adresse, dans lequel le noeud de gestion comprend un gestionnaire de grappes, CM, et un super noeud, SN, dans lequel le gestionnaire de grappes est un jeu d'outils de gestion dans un serveur pour gérer la grappe, et le noeud SN est configuré pour gérer un certain nombre des noeuds ON ; et
est adapté pour lancer une division de grappe pour sélectionner un noeud ON destiné à gérer la nouvelle grappe divisée, si la charge du gestionnaire CM ou du noeud SN est trop importante ; lancer un processus de fusion de grappes, si le nombre de noeuds ON gérés par le gestionnaire SN chute à une certaine valeur ;
dans lequel le lancement de la division de grappe pour sélectionner un noeud ON destiné à gérer la nouvelle grappe divisée comprend :
la sélection, par le noeud SN, d'un noeud ON et l'interrogation, par le noeud SN, que le noeud ON sélectionné peut servir ou non de nouveau noeud SN pour gérer un certain nombre des noeuds ON ;
si le noeud ON sélectionné renvoie une instruction d'accord, l'envoi, par le noeud SN, de l'information requise pour la mise à niveau par le noeud SN au noeud ON sélectionné ;
l'enregistrement auprès un serveur d'ordonnancement central, par le noeud ON sélectionné, afin de servir de nouveau noeud SN, dans lequel un ou plusieurs contenus peuvent être enregistrés ;
l'information, si un contenu est géré par le gestionnaire CM ou le noeud SN avant la division de grappe, à une partie des noeuds ON concernés par ledit contenu de commuter sur le nouveau noeud SN et de se joindre à celui-ci, et si de multiples contenus sont gérés par le gestionnaire CM ou le noeud SN avant la division de grappe et le nombre de noeuds ON d'un certain contenu dépasse une certaine valeur, aux noeuds ON concernés par ledit certain contenu de commuter sur le nouveau noeud SN et de se joindre à celui-ci ;
et le lancement de processus de fusion de grappes comprend :
si aucun noeud SN voisin du noeud SN n'existe, l'information, par le noeud SN, aux noeuds ON de commuter sur le gestionnaire CM, et au noeud SN de se joindre au gestionnaire CM ; ou
si le noeud SN a des noeuds SN voisins, la sélection, par le noeud SN, d'un noeud SN ayant la plus petite charge à fusionner ; l'information, par le noeud SN, aux noeuds ON de commuter sur le noeud SN sélectionné, la déconnexion, par le noeud SN, de toutes les relations de voisinage, et la jonction, par le noeud SN, au noeud SN sélectionné.

11. Système selon la revendication 10, le système comprenant en outre :
un serveur d'ordonnancement central (408), adaptée pour enregistrer le contenu géré par un super noeud, et renvoyer les informations du super noeud dans une région spécifique conformément au contenu ; et
un noeud de gestion de secours (412), adapté pour supplanter le noeud de gestion en cas de sortie anormale du noeud de gestion.
